**Europäisches Patentamt**

**European Patent Office**

**Office européen des brevets**

(19)

(11) Veröffentlichungsnummer: **0 062 142 B1**

# EUROPÄISCHE PATENTSCHRIFT

(12)

(45) Veröffentlichungstag der Patentschrift:
03.07.85

(21) Anmeldenummer: 82100821.6

(22) Anmeldetag: 05.02.82

(51) Int. Cl.⁴: **C 08 J 5/04, D 21 H 5/00, D 04 H 1/74**

(54) Verfahren zur Herstellung von Verbundwerkstoffen aus in einer thermoplastischen Matrix eingebetteten ausgerichteten Verstärkungsfasern.

(30) Priorität: 07.04.81 DE 3113930

(43) Veröffentlichungstag der Anmeldung:
13.10.82 Patentblatt 82/41

(45) Bekanntmachung des Hinweises auf die Patenterteilung:
03.07.85 Patentblatt 85/27

(84) Benannte Vertragsstaaten:
FR GB IT SE

(56) Entgegenhaltungen:
DE - A - 2 163 799
DE - A - 2 251 028
DE - A - 2 715 746
DE - A - 2 850 833
GB - A - 572 962
US - A - 4 104 340

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **Herkert, Claus-Michael, Dipl.-Ing., Herzog-Albrecht-Strasse 67, D-8011 Zorneding (DE)**

**Beschreibung**

Die Erfindung bezieht sich auf ein Verfahren zur Herstellung von Verbundwerkstoffen aus in einer thermoplastischen Matrix eingebetteten ausgerichteten Verstärkungsfasern, wobei ein Gelege aus den ausgerichteten Verstärkungsfasern und thermoplastischem Material hergestellt und das thermoplastische Material auf eine Temperatur oberhalb seines Schmelzpunkts erwärmt wird.

Aus der DE-A 2251028 ist es bekannt, ein Gelege, nämlich Filze, Watten, Bahnen oder Vliese, Papier, Karton oder Schichtgebilde, durch Vereinigen eines organischen Strukturmaterials, beispielsweise in Form von Stapelfasern mit einem thermoplastischen Bindematerial in Form von ggf. Stapelfasern und anschliessendes Schmelzen der thermoplastischen Fasern herzustellen. Die Fasern aus organischem Strukturmaterial liegen in dem Gelege und damit dem aus ihm hergestellten Formkörper jedoch völlig unausgerichtet vor.

Es ist bekannt, verstärkte thermoplastische Verbundwerkstoffe dadurch herzustellen, dass kurzgeschnittene Verstärkungsfasern, wie Glas- oder Kohlenstoffasern, mit pulverförmigem thermoplastischen Material vermischt werden, beispielsweise in einem Extruder, wobei das so erhaltene Extrudat zu Granulat verarbeitet wird, das dann zu dem gewünschten Formkörper verarbeitet werden kann. Die Fasern liegen dabei in dem Formkörper völlig unausgerichtet vor.

Auch ist es zur Bildung eines faserverstärkten Querschnittsprofiles bekannt, einen Filamentstrang mit pulverförmigem thermoplastischen Material zu imprägnieren und nach dem Erwärmen durch eine Formdüse zu führen (CH-PS 518165). Mattenförmige Verbundwerkstoffe, aus denen sich beliebige Formkörper herstellen lassen, sind nach diesem Verfahren jedoch nicht herstellbar.

Zur Herstellung von mattenförmigen Verbundwerkstoffen mit einer Matrix aus thermoplastischem Material und darin eingebetteten, ausgerichteten Glasfasern ist bereits vorgeschlagen worden, als Gelege ein kettstarkes Glasfasergewebe, d.h. ein Gewebe, bei dem die Hauptmenge der Fasern in Kettrichtung vorliegt, also der Anteil der Fasern in Schussrichtung gering ist, oder Glasfasergewebe mit Leinenbindung als Webart einzusetzen und dieses Gewebe mit aufgeschmolzenem thermoplastischen Material zu durchtränken. Der daraus gebildete Verbundwerkstoff weist jedoch mehrere Nachteile auf, und zwar aus folgenden Gründen.

Neben der Ausrichtung der Glasfasern spielt deren Volumenanteil eine wesentliche Rolle für die mechanischen Eigenschaften des Verbundwerkstoffes, d.h. das Glasfasergewebe muss bei diesem Verfahren sehr engmaschig sein. Andererseits weist geschmolzenes thermoplastisches Material eine sehr hohe Viskosität und damit eine entsprechende schlechte Fliessfähigkeit auf, so dass bei sehr engmaschigen Glasfasergeweben die Durchdringung mit dem geschmolzenen thermoplastischen Material nur noch unzureichend erfolgt, und zwar innerhalb der einzelnen Maschen und ganz besonders schlecht zwischen den einzelnen Monofilamenten der Fasern.

Es können daher nur relativ weitmaschige Glasfasergewebe eingesetzt werden, d.h. mit diesem Verfahren lässt sich nur ein Faservolumengehalt von etwa 20% erreichen. Bedingt durch die hohe Viskosität des geschmolzenen Materials, wird bei diesem Verfahren auch die Ausrichtung der Fasern beeinträchtigt, d.h. es kommt zur Bildung sogenannter Locken. Auch treten unverstärkte Matrix-Nester auf. Ein weiterer wesentlicher Nachteil dieses Verfahrens besteht darin, dass, wenn beim Umformen des mattenförmigen Verbundwerkstoffs stärkere Krümmungsänderungen auftreten, die Fasern überdehnt werden und reissen, wodurch sich insbesondere an den Formteilkanten Harznester bilden.

Demgegenüber lassen sich duroplastische Materialien mit einem sehr hohen Gehalt an ausgerichteten Verstärkungsfasern herstellen. Dazu wird beispielsweise eine Suspension aus kurzgeschnittenen Verstärkungsfasern einer Siebtrommel zugeführt, auf deren Trommelmantel eine durchlässige Folie angeordnet ist und in deren Inneren ein Unterdruck herrscht, wodurch die Träger- oder Suspensionsflüssigkeit in das Trommelinnere fliesst, während sich die kurzgeschnittenen Verstärkungsfasern auf der Folie ausgerichtet ablagern. Die Folie mit dem Gelege aus ausgerichteten Verstärkungsfasern wird dann abgenommen, von Resten der Suspensionsflüssigkeit gereinigt, getrocknet und dann mit einer Lösung des wärmehärtbaren duroplastischen Materials getränkt. Nach dem Entfernen des Lösungsmittels liegt dann das mit dem noch nicht ausgehärteten duroplastischen Material getränkte Gelege in Form sogenannter «Prepregs» vor, aus denen die Formteile unter Erwärmung gepresst werden (DE-PS 2163799 und DE-OS 2850833).

Gegenüber thermoplastischem Material weisen derartige verstärkte duroplastische Materialien jedoch entscheidende Nachteile auf. Zum einen sind die «Prepregs» nur begrenzt lagerfähig. Auch erfolgt das Aushärten oder die Polymerisation des duroplastischen Materials erst in der Form, d.h. die Prepregs benötigen eine Verweilzeit oft von mehreren Stunden in der Form, wobei die Form darüber hinaus aufgeheizt werden muss.

Der Erfindung liegt die Aufgabe zugrunde, ein Verfahren zur Herstellung von thermoplastischen Verbundwerkstoffen, die einen hohen Gehalt an ausgerichteten Verstärkungsfasern aufweisen und bei denen auch stärkere Krümmungsänderungen beim Umformen zu keiner Beeinträchtigung der Festigkeit führen, d.h. aus denen auch Formteile mit komplizierter Geometrie pressbar sind, anzugeben.

Bei dem erfindungsgemässen Verfahren zur Herstellung von Verbundwerkstoffen aus in einer thermoplastischen Matrix eingebetteten ausgerichteten Verstärkungsfasern, bei dem ein Gelege aus den ausgerichteten Verstärkungsfasern und thermoplastischem Material hergestellt und das thermoplastische Material auf eine Temperatur oberhalb seines Schmelzpunkts erwärmt wird, wird das thermoplastische Material in Form kurzgeschnittener Fasern eingesetzt, die kurzgeschnittenen thermoplastischen Fasern werden mit kurzgeschnittenen Verstärkungsfasern vermischt und aus dem Gemisch wird dann ein Gelege aus ausgerichteten kurzgeschnittenen thermoplastischen Fasern und ausgerichteten kurzgeschnittenen Verstärkungsfasern gebildet. Die kurzgeschnittenen thermoplastischen Fasern können durch Zerschneiden von Monofilamenten hergestellt sein. Das Mischungsverhältnis der kurzgeschnittenen Verstärkungsfasern zu den kurzgeschnittenen thermoplastischen Fasern in dem Verbundwerkstoff, bezogen auf das Volumen, beträgt vorzugsweise mindestens 20:80, höchstens 65:35.

Zur Bildung des Geleges aus ausgerichteten kurzgeschnittenen thermoplastischen Fasern und ausgerichteten kurzgeschnittenen Verstärkungsfasern wird das Gemisch aus kurzgeschnittenen thermoplastischen Fasern und kurzgeschnittenen Verstärkungsfasern in einem flüssigen Trägermedium suspendiert. Die Suspension wird zur Ausrichtung der Fasern über eine Ablaufrinne und dann auf eine poröse Wandung strämen gelassen, an der das Trägermedium mittels eines Druckgefälles hindurchtritt und auf der sich die gerichteten kurzgeschnittenen thermoplastischen Fasern und Verstärkungsfasern als Gelege ablagern. Die poröse Wandung kann durch eine rotierende, innen mit Unterdruck beaufschlagte Siebtrommel gebildet sein, auf deren Trommelmantel eine durchlässige Folie oder ein Vlies angeordnet ist, auf der sich die ausgerichteten Fasern ablagern, worauf das aus den ausgerichteten Fasern aufgebaute Gelege mitsamt der Folie abgenommen und von anhaftenden Resten des Trägermediums gereinigt wird, worauf das Gelege von der Folie abgenommen wird.

Als Verstärkungsfasern kommen beim erfindungsgemässen Verfahren vor allem Glas- und Kohlenstoffasern in Betracht. Als thermoplastische Materialien, die erfindungsgemäss verwendet werden können, sind zu nennen Polyamid, Polyäthylen, Polypropylen, Polystyrol und Polyvinylchlorid. Das erfindungsgemässe Verfahren ist jedoch nicht auf diese namentlich genannten Verbindungen beschränkt, vielmehr sind sämtliche thermoplastische Materialien verwendbar. Die Verstärkungsfasern können einen Durchmesser von 1 bis 100 µm haben.

Thermoplastische Materialien sind in Form von Fäden im Handel erhältlich. Diese Fäden werden vorzugsweise mit einem Durchmesser eingesetzt, der dem Durchmesser der Verstärkungsfasern etwa entspricht. Die obere Grenze des Durchmessers der thermoplastischen Fäden, die bei etwa 500 µm liegt, wird im wesentlichen dadurch bedingt, dass oberhalb dieser Grenze sich keine Verbundwerkstoffe mehr herstellen lassen, die einen hinreichenden Verstärkungsfaservolumengehalt besitzen. Die untere Grenze des Durchmessers kann z. B. bei 1 µm liegen. Die thermoplastischen Fäden werden ähnlich wie die Verstärkungsfasern mittels Schneidpistolen auf eine Länge von beispielsweise etwa 3 mm geschnitten. Entsprechend dem gewünschten Verstärkungsfaservolumengehalt im Verbundwerkstoff werden dann die kurzgeschnittenen thermoplastischen Fasern mit den geschnittenen Verstärkungsfasern vermischt. Der Anteil der Verstärkungsfasern kann dabei sehr hoch sein, wobei sich eine Mischung von ca. 50 Vol.-% kurzgeschnittener thermoplastischer Fasern und etwa 50 Vol.-% kurzgeschnittener Verstärkungsfasern als besonders geeignet herausgestellt hat.

Das Verhältnis der Länge zum Durchmesser der Verstärkungsfasern sowie der thermoplastischen Fasern beträgt zweckmässig 100:1 bis 1000:1.

Die Ausrichtung der miteinander vermischten kurzgeschnittenen thermoplastischen Fasern und Verstärkungsfasern kann dann nach einem Verfahren erfolgen, wie es zur Ausrichtung kurzgeschnittener Verstärkungsfasern bei der Herstellung von duroplastischen Verbundwerkstoffen bereits bekannt ist. Derartige Verfahren werden beispielsweise beschrieben in der DE-PS 2163799, der DE-OS 2850833, der DE-PS 1760073 sowie der GB-PS 1400530.

Insbesondere das Verfahren nach der DE-PS 2173799 sowie der DE-OS 2850833 bietet sich bei dem erfindungsgemässen Verfahren zur Herstellung eines Geleges aus miteinander vermischten, kurzgeschnittenen, ausgerichteten thermoplastischen und Verstärkungsfasern als brauchbar an.

Danach wird das Gemisch aus kurzgeschnittenen thermoplastischen Fasern sowie kurzgeschnittenen Verstärkungsfasern in einem flüssigen Trägermedium, beispielsweise Glyzerin, suspendiert und dann die Suspension einer rotierenden Siebtrommel zugeführt, in deren Innerem ein Unterdruck herrscht. Auf einer durchlässigen Folie, die auf dem Trommelmantel angeordnet ist, lagern sich dann die Fasern ausgerichtet ab, worauf das aus den ausgerichteten Fasern aufgebaute Gelege mitsamt der Folie abgenommen, von anhaftenden Resten des Trägermediums gereinigt und getrocknet wird. Das Gelege wird dann von der Folie abenommen. Es können mehrere Gelege in unterschiedlichen Richtungen aufeinander abgelegt werden. Durch Erwärmen des oder der Gelege, gegebenenfalls bei oder vor dem Pressen des Formteils, auf eine Temperatur oberhalb des Schmelzpunkts des thermoplastischen Materials, werden dann die ausgerichteten kurzgeschnittenen thermoplastischen Kurzfasern unter Bildung der Matrix des Verbundwerkstoffes aufgeschmolzen. Mit den erfindungsgemäss hergestellten Verbundwerkstoffen sind also Bauteile sehr grosser mechanischer Festigkeit bei sehr geringen Umformzeiten herstellbar.

In der Zeichnung zeigen jeweils schematisch und vergrössert:

Fig. 1 einen Querschnitt durch ein Gelege mit ausgerichteten kurzgeschnittenen thermoplastischen Fasern sowie ausgerichteten kurzgeschnittenen Verstärkungsfasern vor dem Verpressen bzw. dem Erwärmen des thermoplastischen Materials auf eine Temperatur oberhalb seines Schmelzpunktes;

Fig. 2 eine Draufsicht auf das Gelege gemäss Fig. 1 und

Fig. 3 einen Querschnitt durch den Verbundwerkstoff nach dem Verpressen bzw. nach der Erwärmung des thermoplastischen Materials auf eine Temperatur oberhalb dessen Schmelzpunkt und anschliessendem Pressen.

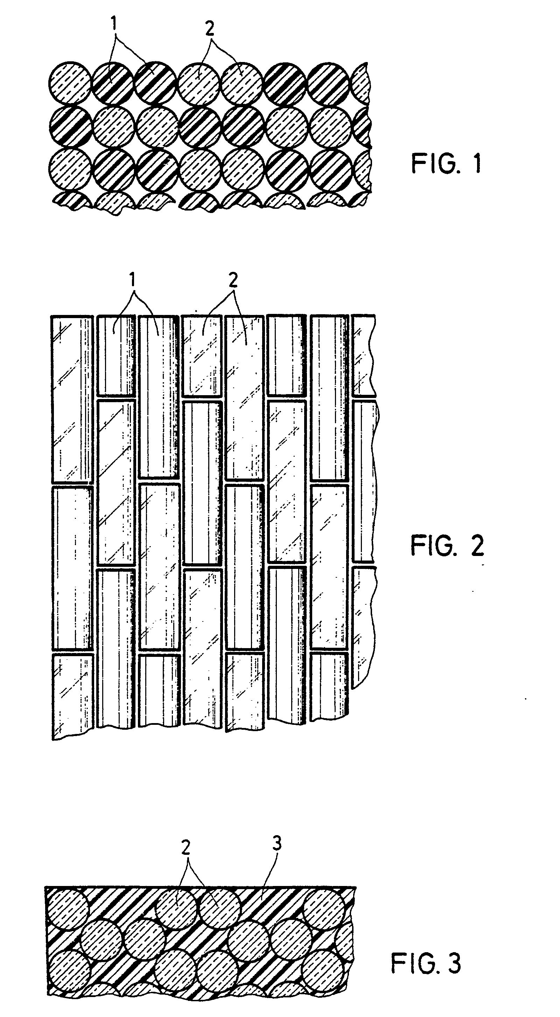

Gemäss Fig. 1 und 2 sind in einem Gelege, das aus einem Gemisch aus kurzgeschnittenen thermoplastischen Fasern und kurzgeschnittenen Verstärkungsfasern, beispielsweise nach dem Verfahren der DE-PS 2163799 hergestellt worden ist, mehrere Schichten vorhanden, die aus ausgerichteten thermoplastischen Kurzfasern 1 und ausgerichteten Verstärkungskurzfasern 2 bestehen.

Nach dem Verpressen bzw. dem Erwärmen des Geleges auf eine Temperatur, die oberhalb des Schmelzpunkts des thermoplastischen Materials liegt, aus denen die thermoplastischen Kurzfasern 1 bestehen, sind, wie in Fig. 3 gezeigt, die thermoplastischen Kurzfasern 1 zur Matrix 3 aufgeschmolzen worden und in die Matrix 3 die Verstärkungskurzfasern 2 eingebettet.

## Patentansprüche

1. Verfahren zur Herstellung von Verbundwerkstoffen aus in einer thermoplastischen Matrix eingebetteten ausgerichteten Verstärkungsfasern, wobei ein Gelege aus den ausgerichteten Verstärkungsfasern und thermoplastischem Material hergestellt und das thermoplastische Material auf eine Temperatur oberhalb seines Schmelzpunkts erwärmt wird, dadurch gekennzeichnet, dass

a) das thermoplastische Material in Form kurzgeschnittener Fasern eingesetzt wird,

b) die kurzgeschnittenen thermoplastischen Fasern mit kurzgeschnittenen Verstärkungsfasern vermischt werden, und dann

c) aus dem Gemisch ein Gelege aus ausgerichteten, kurzgeschnittenen thermoplastischen Fasern und ausgerichteten, kurzgeschnittenen Verstärkungsfasern gebildet wird.

2. Verfahren nach Anspruch 1, dadurch gekennzeichnet, dass das Mischungsverhältnis der kurzgeschnittenen Verstärkungsfasern zu den kurzgeschnittenen thermoplastischen Fasern in dem Verbundwerkstoff, bezogen auf das Volumen, mindestens 20:80, höchstens 65:35 beträgt.

3. Verfahren nach Anspruch 1 oder 2, dadurch gekennzeichnet, dass man zur Bildung des Geleges aus ausgerichteten kurzgeschnittenen thermoplastischen Fasern und ausgerichteten kurzgeschnittenen Verstärkungsfasern das Gemisch aus kurzgeschnittenen thermoplastischen Fasern und kurzgeschnittenen Verstärkungsfasern in einem flüssigen Trägermedium suspendiert, die Suspension zur Ausrichtung der Fasern über eine Ablaufrinne strömen lässt, und man die Suspension dann auf eine poröse Wandung strömen lässt, an der das Trägermedium mittels eines Druckgefälles hindurchtritt und auf der sich die gerichteten kurzgeschnittenen thermoplastischen Fasern und Verstärkungsfasern als Gelege ablagern.

4. Verfahren nach Anspruch 3, dadurch gekennzeichnet, dass die poröse Wandung durch eine rotierende, innen mit Unterdruck beaufschlagte Siebtrommel gebildet wird, auf deren Trommelmantel eine durchlässige Folie oder ein Vlies angeordnet ist, auf der sich die ausgerichteten Fasern ablagern, worauf das aus den ausgerichteten Fasern aufgebaute Gelege mitsamt der Folie abgenommen und von anhaftenden Resten des Trägermediums gereinigt wird, worauf das Gelege von der Folie abgenommen wird.

## Claims

1. A method of producing composite materials from aligned reinforcement fibres embedded in a thermoplastic matrix, in which a lay-up of the aligned reinforcement fibres and thermoplastic material is produced and the thermoplastic material is heated to a temperature above its melting point, characterised in that

a) the thermoplastic material is used in the form of short out fibres,

b) the short cut thermoplastic fibres are mixed with short cut reinforcement fibres, and then

c) from the mixture a lay-up made of aligned short cut thermoplastic fibres and aligned short cut reinforcement fibres is formed.

2. A method according to claim 1, characterised in that the mixture ratio of the short cut reinforcement fibres to the short cut thermoplastic fibres in the composite material, related to the volume, amounts at least to 20:80, at the most to 65:35.

3. A method according to claim 1 or 2, characterised in that, for the formation of the lay-up of aligned short cut thermoplastic fibres and aligned short cut reinforcement fibres, the mixture of short cut thermoplastic fibres and short cut reinforcement fibres is suspended in a fluid carrier medium, the suspension for the alignment of the fibres is caused to flow over a drainage channel, and the suspension is then caused to flow onto a porous wall, at which the carrier medium passes through by reason of a pressure drop and on which the aligned short cut thermoplastic fibres and reinforcement fibres are deposited as a lay-up.

4. A method according to claim 3, characterised in that the porous wall is formed by a rotating sieve drum which is subjected internally to underpressure and on the drum wall of which is arranged a pervious foil or a fleece on which the aligned fibres are deposited, whereupon the lay-up built up from the aligned fibres is removed together with the foil and is cleansed of adhering residues of the carrier medium, whereupon the lay-up is removed from the foil.

## Revendications

1. Procédé de fabrication de matériaux composites à partir de fibres de renforcement alignées noyées dans une matrice thermoplastique où l'on fabrique une nappe à partir des fibres de renforcement alignées et d'un matériau thermoplastique, et où le matériau thermoplastique est chauffé à une température supérieure à son point de fusion, caractérisé en ce que:

a) le matériau thermoplastique est employé sous la forme de fibres courtes,

b) les fibres thermoplastiques courtes sont mélangées à des fibres de renforcement courtes, et enfin

c) on forme à partir du mélange une nappe constituée de fibres thermoplastiques courtes alignées et de fibres de renforcement courtes alignées.

2. Procédé selon la revendication 1, caractérisé en ce que le rapport (en volume) de mélange des fibres de renforcement courtes et des fibres thermoplastiques courtes dans le matériau composite est au moins de 20:80, et au plus de 65:35.

3. Procédé selon la revendication 1 ou 2, caractérisé en ce que, pour former la nappe constituée de fibres thermoplastiques courtes alignées et de fibres de renforcement courtes alignées, on met en suspension le mélange de fibres thermoplastiques courtes et de fibres de renforcement courtes dans un milieu support liquide; qu'afin d'aligner les fibres, on fait s'écouler la suspension par une gouttière d'adduction, et que la suspension est ensuite amenée sur une paroi poreuse, où le milieu support est soutiré par l'action d'une chute de pression, tandis que les fibres de renforcement et les fibres thermoplastiques, courtes et alignées, s'y déposent, pour former la nappe.

4. Dispositif selon la revendication 3, caractérisé en ce que la paroi poreuse consiste en un filtre à tambour rotatif à l'intérieur duquel est établi un vide partiel, que l'enveloppe du tambour est recouverte d'une feuille perméable ou d'un voile sur lequel se déposent les fibres alignées, que la nappe formée par les fibres alignées est ensuite enlevée avec la feuille et débarrassée des résidus de milieu support qui y adhèrent, et qu'enfin on sépare la nappe de la feuille.

FIG. 1

FIG. 2

FIG. 3